# EUROPEAN PATENT APPLICATION

(11) **EP 3 556 873 A1**
(43) Date of publication of application: **23.10.2019**
(21) Application number: 18168220.4
(22) Date of filing: 19.04.2018
(51) Int. Cl.: C22B 3/28, C09K 11/01, C22B 3/38, C22B 7/00, C22B 7/04, C22B 59/00, C22B 1/00

(54) **METHOD FOR INDIVIDUAL RARE EARTH METALS RECYCLING FROM FLUORESCENT POWDER E-WASTES**

(71) Applicant: PAUL SCHERRER INSTITUT, 5232 Villigen PSI (CH)
(72) Inventor: PATIL, Ajay Bhagwan, 5200 Brugg (CH); STRUIS, Rudolf P. W. J., 5400 Baden (CH); SCHULER, Albert Josef, 5312 Döttingen (CH); LUDWIG, Prof. Christian, 5400 Baden (CH)
(74) Representative: Fischer, Michael

(57) **Abstract**

A robust and economically viable process technology is developed for the recycling of critical rare earth (REEs) metals from end of life lamp fluorescent powder (FP) e-waste. This is one of the first efforts to recycle invidual pure REEs from municipal e-waste components to arrive at commercially promising individual REEs purity, which are knowingly difficult to separate from wastes. The process technology addresses the management of strategically important REEs resources relevant for green energy and smart/hybrid technology. The methodology involves cheap mineral acid for near quantitative RE metal sequential digestion and extractive (liquid-liquid) separation protocols using the selective extractant ligand molecules and hydrometallurgical process conditions to separate Y, Eu, and Tb, to more than 99% purity and Gd, La and Ce to elevated purities each from the metal digested FP waste fractions. The developed technology has potential for scale up on industrial scale, re-use of extractant and organic phase as well as extended use for recovering RE metals from other e-waste after optimizations. The process can be employed to REE mixtures from e-waste as well as mining tailings origin. The process has the advantage over inseparable combined digested phosphor fractions as well as over inefficient leaching of Tb from LAP phosphor. It is also one of the first attempts to achieve the individual purity of rare earths raw materials from such a complex waste streams. The novel approach proposed herein with judicial choices of extractants and inventive steps of process hydrometallurgy will help to tap potential in e-waste secondary resources.

## Description

The present invention relates to a method for recovering individual rare earth metal content in electronic waste.

Rare earth elements (REEs: 17 elements Y, Sc, La-Lu) have special optical, magnetic and physical properties. They have extended the technological limits of the conventional electronics. This resulted in the advent of smart technology in the energy, transportation, medicine and diagnostics, advanced defence and space applications. Due to such strategic and advanced uses of the REEs, the European Union and US department of defence declared them as critical raw materials with potential supply risk.

Ever increasing use of such raw materials is resulting in stockpile of valuables in the e-waste as a major resource management concern. Due to lack of reliable and economically feasible processing technology the recovery of such individual raw materials is not commercially undertaken in Europe or other developed countries. In primary mining production also the majority of EU and US based companies are outcompeted. The major process difficulties in the production or recycling of secondary raw materials are due to difficult separations of the REEs, their dilute content in waste streams, and balance problem (stockpiling of unwanted metals during the mining of desired ones) which are not addressed by conventional hydrometallurgical processes in state of the art. Recently some emerging techniques involving ionic liquids or metal organic frameworks have been reported. However, they involve scale up or operational difficulty due to hydrodynamic parameters or costs involved. For e-waste targets, most research groups focus their research on material flows and technical investigations for the mining of REEs or just separating phosphors as a composite mixture of rare earths. The diversity and inhomogeneity of e-waste make REE recovery very challenging and generalized or obvious approaches do not help to resolve the challenging rare earths in the form which can be handed over to front end manufacturing sector.

Therefore, it is the objective of the present invention to provide a robust separation technology which allows reaching high grade individual REE materials from e-waste. This robust separation technology may also be applicable to REE mixtures of different origin including mining tailings after optimizations

This objective is achieved according to the present invention by a method for recovering individual rare earth metal content in electronic waste with top down approach from waste to value, comprising the steps of:
a) mechanical shredding or segregation of the electronic waste in order to arrive at a separated fluorescent powder;
b) thermal Hg removal by capturing into carbon filter under inert conditions;
c) sequentially digesting the separated fluorescent powder at different mineral acid conditions in order to separate different phosphors, preferably HALO (Sr,Ca)₁₀(PO₄)₆(Cl,F)₂:Sb³⁺,Mn²⁺, YOX (Y₂O₃:Eu³⁺), LAP (LaPO₄:Tb, Ce) and BAM (BaMgAl₁₀O₁₇:Eu²⁺) and glass powder;
d) treating the different phosphors according to one or more of the following steps:
   d1) hydroxide washing and nitrate conversion of phosphors (YOX, LAP and BAM);
   d2) controlled dissolution at different Cl mineral acid solution conditions to remove heavier lanthanides or rare earths including Y;
   d3) controlled dissolution at different nitrate solution to remove excess middle lanthanide or rare earths including Ce; d4) application of a plurality of tetra-alkyl ammonium ionic extractants to remove lighter lanthanides;
   d5) application of a plurality of alkyl phosphate to remove Y or Eu from YOX phosphor;
   d6) reduction of Eu in alkyl acid in order to separate Gd content in fluorescent powder e-waste or rare earth containing mixtures.

These method steps provide a recovery of the REE content in e-waste at a commercially acceptable high level of purity. The novel approach of sequential leaching in carefully optimized steps and impurity specific targeting of complex e-waste feeds was found very successful. The inventive contribution focused for the first time on the individual separation of rare earths up to commercially acceptable purities with judicious and nonobvious process parameters and set up.

Preferred embodiments of the present invention are described hereinafter in more detail with reference to the attached drawing which depicts in:
- Figure 1: schematically a sequential digestions scheme for the FP e-waste to process the targeted pure REE containing phosphor products;
- Figure 2: schematically the REE recycling process for fluorescent powder e-wastes;

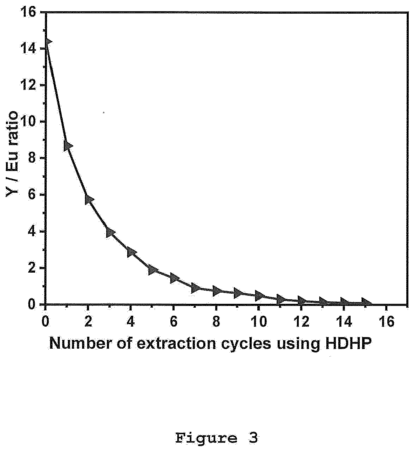

- Figure 3: a graph on the optimized Eu enrichment by excess Y removal as function of extraction stages;

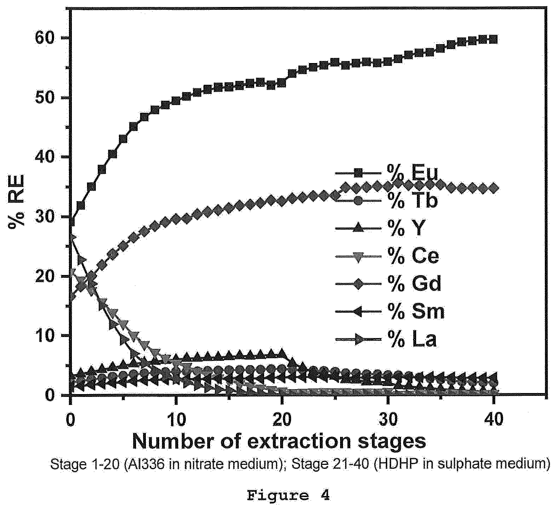

- Figure 4: a chart on the Eu enrichment by La, Ce, Tb and residual Y removal as function of extraction stages;

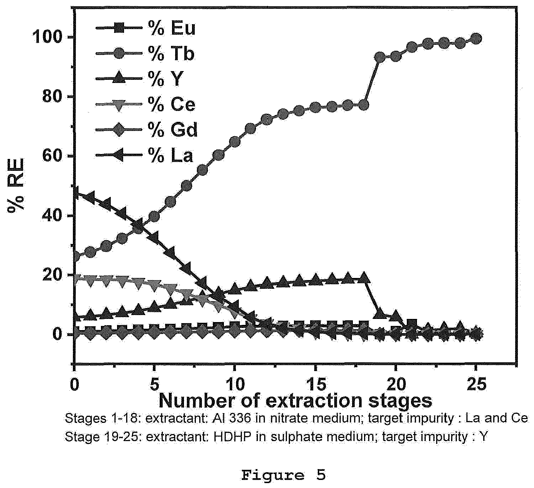

- Figure 5: a chart on the REE concentrations with the Tb purification process as function of extraction stages;

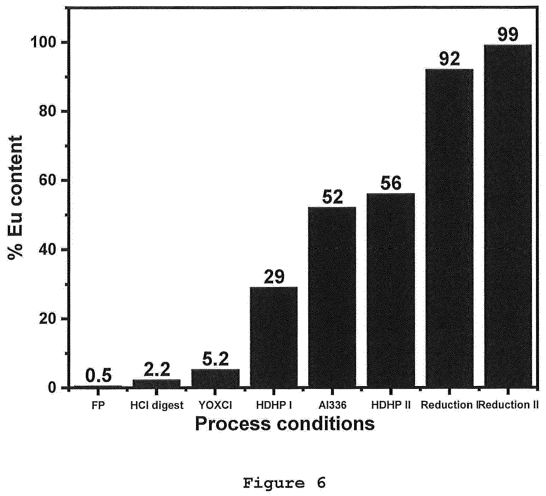

- Figure 6: a chart on the Eu content (% on REE basis only) under different extraction/process conditions; and

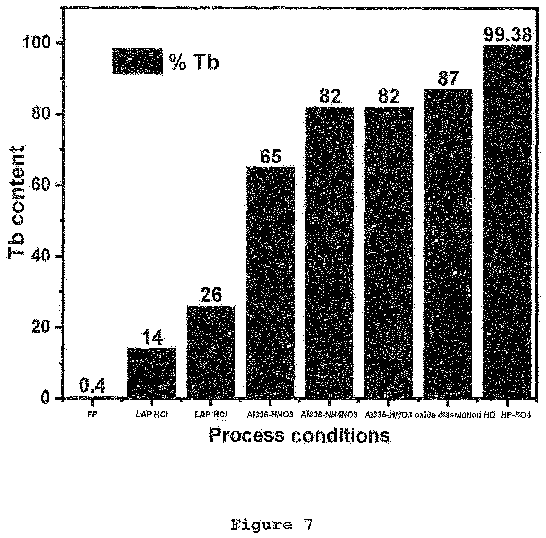

- Figure 7: a chart on the Tb content (% on REE basis only) under different extraction/process conditions.

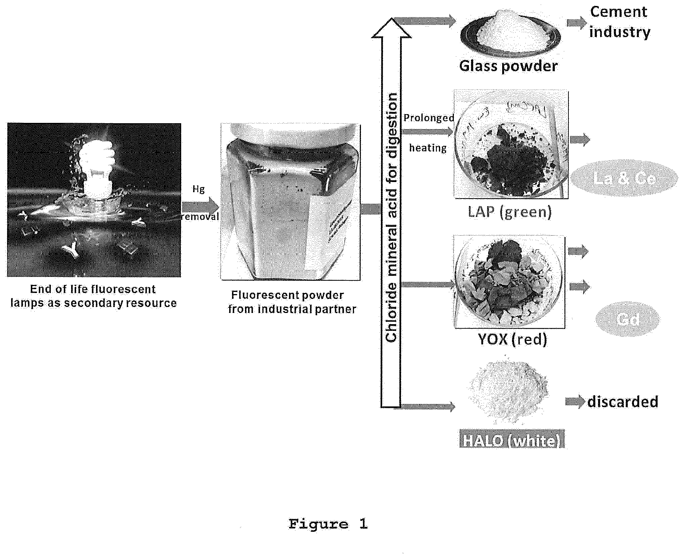

According to the present invention to accomplish the hydrometallurgical operations on the e-waste streams it is first necessary to do the mechanical shredding or segregation in order to arrive at a separated fluorescent powder. The separated fluorescent powder is digested at different mineral acid conditions to find the best suitable sequential leaching conditions. The process has been optimized for achieving the best possible leaching efficiency for different phosphors as well as for individual rare earth elements (see Figure 1, Table 1). In the state of the arts reports the combined or total leaching makes the rare earth mixture too complex to resolve in economical way. Also the literature suggests the struggle of the research groups for the leaching of Tb in the LAP phosphor which was successfully overcome by the process conditions according to the present invention.

**Table 1: Leaching efficiency of different REEs from the developed sequential digestion process as calculated from ICP-OES data**

| **RE element** | **Total amount (mg) obtained with 100 g FP after sequential leaching** | **Maximum amount (mg) expected for the 100 g FP batch** | **% Recovery (± 5% error)** |
|---|---|---|---|
| Ce (Cer) | 735 | 727 | Quantitative |
| Eu (Europium) | 559 | 521 | Quantitative |
| Gd (Gadolinium) | 148 | 268 | 55.1 |
| La (Lanthan) | 1212 | 1142 | Quantitative |
| Tb (Terbium) | 419 | 438 | 95.6 |
| Y (Yttrium) | 10030 | 10426 | 96.2 |

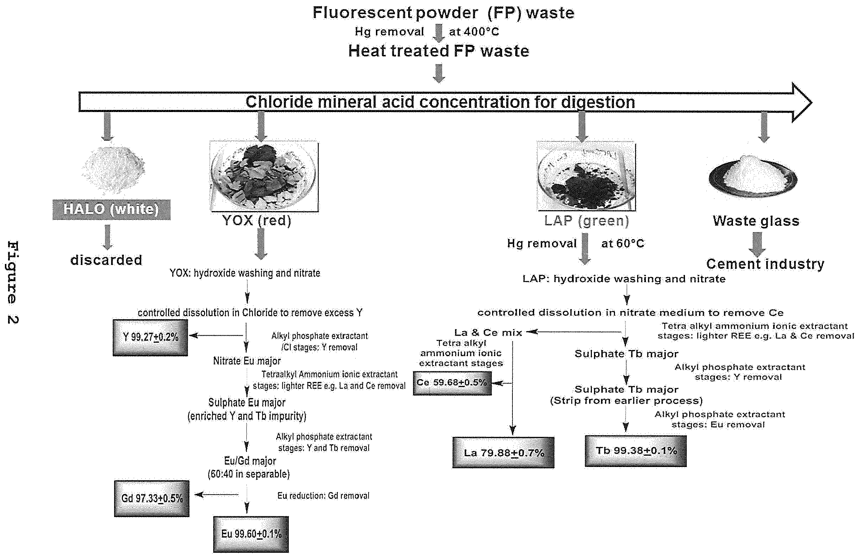

A preferred digestion process comprises the following steps: Initially, Hg removal is carried out by heat treatment at 400°C as shown in Figure 2. The digestion is performed to achieve distinct separation of different phosphors HALO, YOX, LAP and glass powder with optimized unique sequential approach. To achieve the effective leaching of LAP, HCl is used to digest in sequentially increasing concentration with elevated temperature for prolonged duration.. Tb was near quantitatively leached for the first time in literature. This was not possible with obvious processes mentioned in state of the art.

One highlight of the process is the cost effective method to leach and purify the Tb metal, which is one of the most expensive rare earth elements. The cost effectiveness given by recycling (re-use) of the organic fluids and principally also the extractants used in liquid -liquid extraction are further advantages. Moreover, also the digestion acid can be re-used several times with the sequential step within the pH-strength step it came from.

At present, the three different extraction procedures were developed at Paul Scherrer Institute, Villigen, Switzerland, for purifying Y, Tb, and Eu, together. Gd was achieved as a by-product of the Eu separation. As well as La and Ce separation was achieved to elevated purity levels from output of Tb purification. The recycled products pure Y, Eu, Tb, Gd, La and Ce had been achieved successfully along with promising process economics.

The process according to the example comprises the following steps depicted in Figure 2:
1. Removal of non RE impurities (Ca, Na, K, Mg, Ba, B and Mg) at dilute HCl medium with additional benefit of Y enrichment to 1.5 times than with the digested YOX have been achieved. This was done by washing out the soluble non RE impurities.
2. Selective Y separation from Eu and Gd in pre-enriched YOX fraction using 0.5M Alkyl Phosphates e.g. Bis-2-Ethylhexyl-hydrogen Phosphate (HDHP) in toluene (Extracting organic phase) at 0.5M HCl (loading) aqueous phase with 50gm/L YOXCl loading. The Y > 99% was achieved in single stage in strip solution (washing aqueous phase) of 2M HCl.
3. Removal of excess Y to enrich Eu and Gd using the above mentioned system with several repeated stages performed with YOX chloride concentrate.
4. Removal of excess La and Ce impurity from enriched YOX nitrate using nitrate derivative of (Tetralkyl ammonium ionic extractant), e.g. Methyltrioctyl ammonium chloride (Al336). Al336 was dissolved in 70:30 Toluene:Kerosene. Again the enriched YOX nitrate was dissolved in HNO₃ 50gm/L and extracted using Al336 in controlled and H⁺ competing conditions. This helped faster removal of La and Ce in several repeated stages. Strip solution used was 0.001M HNO₃. Such rapid decontamination of La and Ce made it possible to obtain Tb in desired purity as clear advantage over state of the art methods. The precipitation methods generally used in literature to remove Ce are not sufficient enough to achieve >99% purity of Tb from complex e-waste solutions.
5. Thereafter this enriched YOX fraction contains still remaining Tb impurity. To remove this, YOX was converted from nitrate to sulphate again via hydroxide. It was dissolved in 1.5M H₂SO₄ solution (loading aqueous phase) with 50gm/L concentration. Extracting organic phase used here was 1M Alkyl phosphate e.g. HDHP in toluene and strip solution was 2.5M H₂SO₄. This helped removal of still remaining Tb and Y in several repeated stages to arrive at 60:40 Eu:Gd composition similar to mining compositions. This was inseparable using extractive methods.
6. This inseparable Eu and Gd mixture was subjected to optimized and unique reduction conditions in Alkyl Acid medium at dilute acid or lower pH conditions. The Eu/Gd mixture was dissolved in alkyl acid e.g. acetic acid solution and was purged with 4% Hydrogen in Argon. The reduction was carried out using Zn metal powder. The reduced Eu was precipitated using 1M H₂SO₄ and was washed with 0.001M H₂SO₄ three times to remove adsorbed Gd impurity. This resulted in 99% Eu and 97% Gd purity in respective precipitate and supernatant fractions (see Table 2). The conventional Eu reduction methods in Zn chloride medium was not found suitable. Therefore, the alternative and suitable method is established which is applicable in e-waste containing complex solutions.
7. LAP fraction of green phosphor was processed independently for the recovery of La, Ce and Tb rare earth metals. The LAP in chloride emanating from acid digestion was converted to nitrate (via hydroxide). This solution feedstock was taken to extraction cycles with tetraalkyl ammonium ionic extractant e.g. Al 336 (in 70:30 toluene: kerosene) as extractant organic solution. The feed Tb containing LAP fraction was maintained at nitrate conditions to selectively remove lighter lanthanides or rare earths e.g. La and Ce.
8. Most of the lighter lanthanides e.g. La and Ce were removed within several hydrometallurgical extraction stages (with stripping using 0.001M HNO₃) from this preconcentrated LAP phosphor fraction. The La and Ce purity of 79 and 59% was achieved during the process.
9. Subsequently then concentrated Y impurity was removed using 1M alkyl phosphate extractant e.g. HDHP in Toluene as extractant organic solution with 1.5M H₂SO₄ solution (initial metal loading aqueous phase) with 50 gm/L concentration. The strip solution was 2.5M H₂SO₄. After several stages extraction gave 99% pure Tb as a product.

**Table 2: Eu purity confirmation using ICP-MS**

| | Acetic Acid Feed (Control) | Product Precipitate after reduction | Product Precipitate after reduction duplicate | HCl Feed (Control) | Gd product in solution after reduction | Product Precipitate after reduction duplicate | Product Precipitate after reduction |
|---|---|---|---|---|---|---|---|
| % Eu | 60.92 | 99.73 | 99.60 | 61.13 | 2.15 | 96.46 | 95.84 |
| % Gd | 38.36 | 0.25 | 0.28 | 38.62 | 97.33 | 3.51 | 4.06 |

**Table 3: Optimization of Large Scale LAP batch (calculated from ICP-OES data)**

| RE metal % | After HCl digestion | Clear solution in dilute nitrate medium | Precipitate at dilute nitrate medium | (After drying) Clear solution |
|---|---|---|---|---|
| Tb | 13.7 | 17.2 | 8.0 | 18.8 |
| La | 49.2 | 55.3 | 26.3 | 53.4 |
| Ce | 34.5 | 21.3 | 59.6 | 20.8 |
| Y | 2.3 | 3.2 | 1.5 | 3.3 |

**Table 4: LAP fraction composition after Chloride mineral acid leaching (analysed by ICP-OES) BDL = Below detection limits**

| Element (mg/liter) | LAP fraction after Chloride mineral acid digestion |
|---|---|
| Eu | 0.1 |
| Tb | 7.9 |
| Y | 1.3 |
| Ce | 19.8 |
| Gd | 0.0 |
| La | 28.3 |
| Nd | BDL |
| Sm | BDL |
| Dy | BDL |
| Ho | BDL |
| Er | BDL |
| Tm | BDL |
| Yb | BDL |
| Lu | BDL |
| Sc | BDL |
| Pr | BDL |
| Total RE | 57.3 |
| % Tb | 13.7 |
| % Ce | 34.5 |
| % La | 49.3 |

The present invention therefore discloses an exclusive approach to extract pure Y, Eu, Tb, Gd, La, and Ce fractions using an efficient and optimized hydrometallurgical process from shredded electronic waste. The approach also claims the environment friendly and safe treatment of toxic Hg content in this waste. Cost effective recycling process for Y, Tb and Eu rare earths with commercial acceptable purities has been developed. The fluorescent powder waste has been successfully exploited as the potentials secondary resource. The process takes care of the waste and resource management of the major segment of municipal e-waste stream. The test was performed on fluorescent powder waste from lamp recycling. However, other shredded e-waste resides can be processed with this methodology to obtain pure rare earths fractions after certain optimizations to recover pure RE metal fractions.

## Claims

1. A method for recovering individual rare earth metal content in electronic waste, comprising the steps of:
a) mechanical shredding or segregation of the electronic waste in order to arrive at a separated fluorescent powder;
b) thermal Hg removal using carbon filters under inert conditions;
c) digesting the separated fluorescent powder at different mineral acid conditions in order to separate different phosphors, preferably HALO, YOX, LAP and BAM and glass powder;
d) treating the different phosphors according to one or more of the following hydrometallurgical steps:
d1) hydroxide washing and nitrate conversion of phosphors (YOX, LAP and BAM);
d2) controlled dissolution at different Cl mineral acid solution conditions to remove heavier lanthanides or rare earths including Y;
d3) controlled dissolution at different nitrate solution to remove excess middle lanthanide or rare earths including Ce;
d4) application of a plurality of tetra-alkyl ammonium ionic extractants to remove lighter lanthanides by liquid-liquid extraction;
d5) application of a plurality of alkyl phosphate to remove Y or Eu from YOX phosphor by liquid-liquid extraction;
d6) reduction of Eu in alkyl acid in order to separate Gd content.
